# EUROPÄISCHE PATENTSCHRIFT

(11) **EP 3 408 169 B1**
(45) Veröffentlichungstag und Bekanntmachung des Hinweises auf die Patenterteilung: **21.08.2019**
(21) Anmeldenummer: 17701505.4
(22) Anmeldetag: 26.01.2017
(51) Int. Cl.: B63B 35/32, B63G 8/00, E02B 15/04

(54) **FERNGESTEUERTES UNTERWASSERFAHRZEUG ZUR ÖLABSAUGUNG AUF DER UNTERSEITE EINER EISFLÄCHE**
REMOTE-CONTROLLED UNDERWATER VEHICLE FOR SUCTION OF OIL FROM THE UNDERSIDE OF AN ICE SURFACE
VÉHICULE SOUS-MARIN TÉLÉCOMMANDÉ DESTINÉ À ASPIRER DU PÉTROLE PRÉSENT SOUS LA FACE INFÉRIEURE D'UNE CALOTTE DE GLACE

(30) Priorität: 26.01.2016 DE 102016201102
(43) Veröffentlichungstag der Anmeldung: 05.12.2018
(73) Patentinhaber: ThyssenKrupp Marine Systems GmbH, 24143 Kiel (DE); thyssenkrupp AG, 45143 Essen (DE)
(72) Erfinder: SCHIEMANN, Marc, 24145 Kiel (DE)
(74) Vertreter: thyssenkrupp Intellectual Property GmbH
(86) Internationale Anmeldenummer: PCT/EP2017/051644
(87) Internationale Veröffentlichungsnummer: WO 2017/129680

(56) Entgegenhaltungen:
- WO-A1-2012/168334
- WO-A1-2015/018976
- GB-A- 2 250 450
- US-A1- 2014 183 145

## Beschreibung

Die Erfindung betrifft ein ferngesteuertes Unterwasserfahrzeug zur Absaugung von Öl von der Unterseite einer geschlossenen Eisdecke, ein System zur Absaugung von Öl von der Unterseite einer geschlossenen Eisdecke bestehend aus einem ferngesteuerten Unterwasserfahrzeug und einem Unterseeboot sowie ein Verfahren zur Absaugung von Öl von der Unterseite einer geschlossenen Eisdecke.

Die Ausbeutung von Ölfeldern auch unter dem arktischen Eis wird zunehmend wirtschaftlich interessant. Ein großes Problem bei der maritimen Ölförderung sind jedoch die Gefahren im Havariefall. Daher werden Methoden zur Entfernung von Öl aus maritimen Systemen entwickelt. Aus der US 2008/0135494 A1 ist ein Apparat bekannt, welcher eine Unterwasser operierende Einheit und ein Überwasserfahrzeug aufweist.

Unter einer geschlossenen Eisdecke ist jedoch eine Absaugung von einem Überwasserschiff aus nicht möglich. Zusätzlich steigt das Öl im Normalfall auf und sammelt sich damit unmittelbar unter der Eisdecke. Daher wird heutzutage im Havariefall versucht, durch Bohrungen oder Schnitte im Eis an das Öl zu gelangen, um dieses abzusaugen oder zu binden. Dieses ist jedoch aufwändig, langsam und kann das Öl unter der Eisschicht nicht vollständig erreichen.

Aus der WO2012/168554 A1 ist ein Unterseeboot zur Olbekämpfung bekannt. Dieses kann beispielsweise einen Rüssel als Teil einer Ölabsaugevorrichtung aufweisen.

Es hat sich jedoch gezeigt, dass ein Unterseeboot an sich zu groß ist, um Öl, welches sich an der Unterseite von Eis angesammelt hat, abzusaugen. Hinzu kommt, dass das Unterseeboot an sich durch die oftmals sehr unregelmäßige Oberfläche des Eises selber einer Gefährdung ausgesetzt wird. Dieses gilt insbesondere, da eine exakte Detektion von Öl nur auf vergleichsweise geringe Distanz möglich ist.

Aus der US 2014/0183145 A1 ist ein Apparat bekannt, welcher ein ferngesteuertes Unterwasserfahrzeug und ein Überwasserfahrzeug aufweist.

Aufgabe der Erfindung ist es, eine Vorrichtung bereitzustellen, welche Öl, welches sich auf der Unterseite von Eis ansammelt, zuverlässig zu erreichen, zu orten und aufzusaugen.

Gelöst wird diese Aufgabe durch ein ferngesteuertes Unterwasserfahrzeug mit den in Anspruch 1 angegebenen Merkmalen, ein System mit den in Anspruch 8 angegebenen Merkmalen sowie das Verfahren mit den in Anspruch 10 angegebenen Merkmalen. Vorteilhafte Weiterbildungen ergeben sich aus den Unteransprüchen, der nachfolgenden Beschreibung sowie den Zeichnungen.

Das erfindungsgemäße ferngesteuertes Unterwasserfahrzeug zur Absaugung von Öl von der Unterseite einer geschlossenen Eisdecke weist Antriebsmittel, wenigstens eine Pumpe, wenigstens ein Mittel zur Ortung von Öl sowie ein Verbindungsmittel zu einem Mutterfahrzeug auf. Die Pumpe ist zur Absaugung von Fluid ausgebildet. Das Verbindungsmittel weist wenigstens eine erste Verbindung zur Kommunikation, eine zweite Verbindung zur Energieversorgung des ferngesteuerten Unterwasserfahrzeugs und eine dritte Verbindung zur Beförderung von abgesaugtem Fluid zum Mutterfahrzeug auf. Weiter weist das ferngesteuerte Unterwasserfahrzeug wenigstens einen ersten Auftriebskörper auf, wobei das ferngesteuerte Unterwasserfahrzeug unter Wasser einen Auftrieb aufweist.

Fluid umfasst im Sinne dieser Erfindung insbesondere alle Wasser-Ol-Gemische sowie Wasser und Öl, wobei diese auch feste oder hochviskose Bestandteile enthalten können. Neben Bestandteilen aus Öl sowie deren Abbau- oder Reaktionsprodukte können diese auch Plankton und/oder Schwebepartikel umfassen, welche natürlich in Meerwasser vorkommen. Öl umfasst im Sinne der Erfindung alle petrochemischen Roh-, Zwischen- und Endprodukte, beispielsweise Rohöl, Diesel oder Schmieröl.

Durch den Auftrieb treibt das ferngesteuerte Wasserfahrzeug ohne aktiven Antrieb automatisch nach oben auf, nähert sich somit von alleine der Unterseite einer Eisdecke. Gegen diesen Auftrieb kann das ferngesteuerte Wasserfahrzeug mit Hilfe des Antriebsmittels aktiv in Schwebe gehalten werden, indem das Antriebsmittel einen gleichgroßen Abtrieb erzeugt. Hierdurch kann eine sichere Positionierung des ferngesteuerten Wasserfahrzeugs unter der Eisdecke erzielt werden.

Insbesondere ist der Auftrieb gering, beispielsweise im Bereich 0,05 bis 0,1 m/s. Dieser geringe Auftrieb kann durch die Anbringung geeigneter Auftriebskörper am Wasserfahrzeug eingestellt werden. Vorteil an einem geringen Auftrieb ist, dass das Wasserfahrzeug bei einer Betriebsstörung alleine aufschwimmt und leicht geborgen werden kann und andererseits die Antriebsmittel keinen großen Energiebedarf haben, um einen Abtrieb zu erzeugen. Gleichzeitig muss das Wasserfahrzeug nicht aktiv einen Auftrieb erzeugen, sodass hierdurch Energie für das Antriebssystem eingespart werden kann.

Durch die zweite Verbindung zur Energieversorgung kann das ferngesteuerte Wasserfahrzeug mit Energie versorgt werden. Hierdurch benötigt das ferngesteuerte Wasserfahrzeug keine eigenen Mittel zur Energiespeicherung und/oder Energieerzeugung und kann hierdurch kompakt und beweglich ausgeführt werden. Dieses erleichtert die Navigation unter einer Eisdecke, welche regelmäßig stark strukturiert ist.

In einer weiteren Ausführungsform der Erfindung ist das Mittel zur Ortung von Öl ausgewählt aus der Gruppe umfassend Sonar, Fächerecholot (engl.: multibeam sonar), Ultraschall-Doppler-Profil-Strömungsmesser (engl.: Acoustic Doppler Current Profiler), Infrarotspektrometer, visuelle Kamera, Gaschromatograph und Massenspektrometer.

Die verschiedenen Mittel zur Ortung haben sehr unterschiedliche Reichweiten und Genauigkeiten der Ermittlung von Ölverunreinigungen. Beispielsweise können mit dem Ultraschall-Doppler-Profil-Strömungsmesser Gasblasen oder Öltröpfchen auf etwa 700 m Entfernung geortet werden. Das Fächerecholot erlaubt eine genauer Detektion auf etwa 30 m.

Infrarotspektrometer und Massenspektrometer erlauben eine exakte Identifikation, haben jedoch nur eine sehr geringe bis keine Reichweite (Probennahme im oder am Fahrzeug).

Besonders bevorzugt weist das ferngesteuerte Wasserfahrzeug ein Fächerecholot auf. Weiter bevorzugt ist das Fächerecholot schwenkbar. Hierdurch ist eine Navigation im Nahbereich durch das ferngesteuerte Wasserfahrzeug besonders optimal möglich.

Bei der Verwendung einer visuellen Kamera verfügt das ferngesteuerte Wasserfahrzeug bevorzugt über Leuchtmittel, beispielsweise wenigstens einen Scheinwerfer.

In einer weiteren Ausführungsform der Erfindung weist das ferngesteuerte Unterwasserfahrzeug wenigstens ein erstes Mittel zur Ortung von Öl und wenigstens ein zweites Mittel zur Ortung von Öl auf, wobei das erste Mittel zur Ortung von Öl und das zweite Mittel zur Ortung von Öl verschieden sind. Beispielsweise verfügt das ferngesteuerte Unterwasserfahrzeug über eine visuelle Kamera und ein Fächersonar.

In einer weiteren Ausführungsform der Erfindung ist die Pumpe bzw. der Ansaugstutzen der Pumpe an der Oberseite des ferngesteuerten Wasserfahrzeugs angeordnet. Da das ferngesteuerte Wasserfahrzeug zur Absaugung von Öl von der Unterseite einer geschlossenen Eisdecke ausgebildet ist, dient es dazu, Öl, welches spezifisch leichter als Wasser ist und sich daher unmittelbar unter dem Eis ansammelt, aufzusaugen. Daher ist das Öl oberhalb des ferngesteuerten Wasserfahrzeugs angeordnet und somit die Ansaugung an der Oberseite sinnvoll.

In einer weiteren Ausführungsform weist die Pumpe eine Vorrichtung zur Zuführung von Wasser auf. Wird nur zum Teil hochviskoses Öl gefördert, kann dieses die Pumpe stark belasten. Durch gleichzeitiges Fördern von Wasser und Öl wird zwar ein größerer Volumenstrom gefördert, die effektive Viskosität und damit der Energieverlust kann jedoch reduziert werden.

In einer weiteren Ausführungsform der Erfindung weist das ferngesteuerte Unterwasserfahrzeug ein Rahmengestell auf. Unter einem Rahmengestell ist ein Gestell zu verstehen, welches das ferngesteuerte Unterwasserfahrzeug umgibt und beispielsweise aus Stäben oder Rohren gebildet wird. Durch dieses Rahmengestellt wird bei vergleichsweise geringem Gewicht und guter Erreichbarkeit aller Komponenten ein Schutz für das ferngesteuerte Unterwasserfahrzeug erzeugt, da eine mögliche Kollision im Regelfall zunächst auf das Rahmengestell trifft.

In einer weiteren Ausführungsform der Erfindung besteht der Auftriebskörper aus einem Schaumstoff. Schaumstoffe haben den Vorteil, dass diese eine geringe Dichte und hohe Stabilität verbinden. Besonders bevorzugt besteht der Schaumstoff aus einem syntaktischen Polyurethan.

In einer weiteren Ausführungsform der Erfindung besteht das Antriebsmittel aus wenigstens einem ersten Strahlruder (engl.: thruster). Besonders bevorzugt ist das wenigstens eine erste Strahlruder auf der Unterseite des ferngesteuerten Wasserfahrzeugs angeordnet. Hierdurch kann die Wahrscheinlichkeit des Kontakts des wenigstens einen ersten Strahlruders mit dem Öl minimiert werden.

In einer weiteren Ausführungsform der Erfindung besteht das Antriebsmittel aus wenigstens einem ersten Strahlruder, wobei das wenigstens eine erste Strahlruder vertikal zur Erzeugung von Auftrieb oder Abtrieb angeordnet ist.

In einer weiteren Ausführungsform der Erfindung weist das Antriebsmittel ein zweites Strahlruder auf, wobei das zweite Strahlruder horizontal zur Erzeugung von Vortrieb angeordnet ist und entlang einer vertikalen Achse schwenkbar ist.

In einer weiteren alternativen Ausführungsform der Erfindung weist das Antriebsmittel wenigstens zwei zweite Strahlruder auf, wobei die wenigstens zwei zweiten Strahlruder horizontal zur Erzeugung von Vortrieb angeordnet sind.

In einer weiteren Ausführungsform der Erfindung ist die wenigstens eine Pumpe zur Abtrennung von Öl und Wasser ausgebildet. Förderung und Abtrennung kann mittels Zentrifugalabtrennung erfolgen (engl.: centrifugal skimmer).

In einer weiteren Ausführungsform der Erfindung weist das ferngesteuerte Wasserfahrzeug eine Vorrichtung zur Abtrennung von Öl und Wasser auf. Bevorzugt handelt es sich bei der Vorrichtung zur Abtrennung von Öl und Wasser um eine Phasenabscheidung.

In einer weiteren Ausführungsform der Erfindung ist das ferngesteuerte Unterwasserfahrzeug zur Abgabe eines Dispersants ausgebildet, um das Öl zu bekämpfen. Vorzugsweise ist hierbei die Pumpe sowohl zur Absaugung von Fluid ausgebildet als auch zum Ausstoß des Disperants ausgebildet. Insbesondere weist das Verbindungsmittel eine zusätzliche Versorgungsleitung auf, die das Unterwasserfahrzeug mit Dispersant versorgt. Über ein optionales, zwischengeschaltetes Ventil kann zwischen der Leitung zum Abpumpen und Versorgung mit Dispersant umgeschaltet werden.

In einer weiteren Ausführungsform der Erfindung weist das ferngesteuerte Unterwasserfahrzeug ein an der Pumpe angeordnetes, vorzugsweise teleskopierbares, Saugrohr auf. Durch die Verwendung eines Saugrohres kann der Abstand des ferngesteuerten Unterwasserfahrzeugs zum Eis vergrößert werden, wodurch das Risiko einer Kollision verringert wird. Zusätzlich wird das Risiko verringert, dass das Antriebsmittel in Kontakt mit Öl kommt und so in seiner Funktionsfähigkeit beeinträchtigt werden könnte.

In einer weiteren Ausführungsform der Erfindung weist das ferngesteuerte Unterwasserfahrzeug eine Wasserstrahllanze auf. Mit Hilfe der Wasserstrahllanze kann das Eis von der Unterseite gereinigt werden, um festsitzendes oder eingeschlossenes Öl zugänglich zu machen, besser erreichen zu können und somit zu entfernen.

In einer weiteren Ausführungsform der Erfindung weist das ferngesteuerte Unterwasserfahrzeug eine Bürste auf. Mit Hilfe der Bürste kann das Eis von der Unterseite gereinigt werden, um festsitzendes Öl zu entfernen.

In einem weiteren Aspekt betrifft die Erfindung ein System zur Absaugung von Öl von der Unterseite einer geschlossenen Eisdecke bestehend aus einem erfindungsgemäßen ferngesteuerten Unterwasserfahrzeug und einem Unterseeboot, wobei das das ferngesteuerte Unterwasserfahrzeug mit dem Verbindungsmittel mit dem Unterseeboot verbunden ist.

In einer weiteren Ausführungsform der Erfindung weist das Unterseeboot Mittel zur Energieerzeugung, Mittel zur Steuerung des ferngesteuerten Unterwasserfahrzeugs, Mittel zur Speicherung von Öl, Mittel zur Ortung von Öl sowie Mittel zur Aufnahme des ferngesteuerten Unterwasserfahrzeugs auf.

Vorteil eines solchen Systems ist die schnelle Einsatzmöglichkeit des Systems zur Entfernung von Öl unter Eis. Während das Unterseeboot schnell getaucht das Einsatzgebiet erreichen kann und über die notwendigen Infrastrukturvorrichtungen, beispielsweise Energieerzeugung und Lebenserhaltung für die Besatzung verfügt, kann das Unterseeboot ausreichend Abstand zum Eis halten. Vor Ort kann das ferngesteuerte Unterwasserfahrzeug ausgesetzt und gezielt an verunreinigte Orte gebracht werden. Vorzugsweise ortet das Unterseeboot hierzu potentielle Bereiche mit seinen Mittel zur Ortung von Öl, wobei diese Mittel vorzugsweise auf größere Distanz operieren. Beispielsweise und bevorzugt handelt es sich um ein Ultraschall-Doppler-Profil-Strömungsmesser (engl.: Acoustic Doppler Current Profiler). Die Mittel zur Speicherung von Öl des Unterseeboots sind bevorzugt in Form eines flexiblen Containers ausgeführt, welcher sein Volumen bei der Aufnahme des Öls bzw. des Öl-Wasser-Gemisches vergrößert. Beispielsweise können die Mittel zur Speicherung von Öl ein gesamtes Fassungsvolumen von 1.000 bis 5.000 m³ aufweisen. Das Unterseeboot kann über eine Vorrichtung zur Separierung von Öl und Wasser verfügen.

In einer weiteren Ausführungsform der Erfindung ist das System zur Ausbringung von Dispersant ausgebildet. Hierzu verfügt das Unterseeboot über Mittel zur Speicherung des Dispersants. Das Dispersant kann entweder über die dritte Verbindung zur Beförderung von abgesaugtem Fluid oder eine weitere Verbindung zur Beförderung des Dispersants zum ferngesteuerten Unterwasserfahrzeug verbracht werden.

Selbstverständlich kann das Unterseeboot zu Aufnahme weiterer ferngesteuerter Unterwasserfahrzeuge ausgebildet sein.

In einem weiteren Aspekt betrifft die Erfindung ein Verfahren zur Absaugung von Öl von der Unterseite einer geschlossenen Eisdecke. Das Verfahren umfasst die folgenden Schritte:
a) Ansteuern der unter der geschlossenen Eisdecke liegenden Havariestelle mit einem Unterseeboot,
b) Bestimmen der ungefähren Position von Öl an der Havariestelle durch das Unterseeboot,
c) Aussetzen eines erfindungsgemäßen ferngesteuerten Unterwasserfahrzeugs aus dem Unterseeboot,
d) Anfahren der ungefähren Position von Öl durch das ferngesteuerte Unterwasserfahrzeug,
e) Bestimmen der genauen Position von Öl durch das ferngesteuerte Unterwasserfahrzeug,
f) Anfahren der genauen Position von Öl durch das ferngesteuerte Unterwasserfahrzeug,
g) Absaugen von Öl durch das ferngesteuerte Unterwasserfahrzeug, Transferieren des Öls zum Unterseeboot durch die dritte Verbindung zur Beförderung von abgesaugtem Fluid sowie Lagerung des Öls,
h) Aufnehmen des ferngesteuerten Unterwasserfahrzeugs durch das Unterseeboot.

In einer weiteren Ausführungsform der Erfindung umfasst das Verfahren zusätzlich den folgenden Schritt:
i) Ansteuern eines Ortes zur sicheren Entsorgung des aufgenommenen Öls.

In einer weiteren alternativen Ausführungsform der Erfindung umfasst das Verfahren zusätzlich die folgenden Schritte:
j) Deponieren des gesammelten Öls in wenigstens einem geeigneten Lagerbehälter am Grund,
k) Warten bis zum Abschmelzen des Eises,
I) Aufnehmen des wenigstens einen Lagerbehälters durch ein Überwasserschiff.

Diese Ausführungsform hat den Vorteil, dass die Menge des gereinigten Öls nicht durch das Fassungsvermögen des Unterseeboots begrenzt ist. Hierdurch können auch größere Kontaminationen schneller beseitigt werden. Dieses Verfahren ist jedoch nur in Bereichen anwendbar, die nicht ganzjährig unter Eis liegen. Als Lagerbehälter kommen bevorzugt entfaltbare Lagerbehälter zum Einsatz, da hierdurch der Transport vereinfach ist. Besonders bevorzugt weisen die Lagerbehälter eine entfaltbare Auftriebseinheit auf. Nach dem Entfalten der entfaltbaren Auftriebseinheit treiben die Lagerbehälter auf und können einfach von einem Überwasser aufgenommen werden. Aufnehmen umfasst in diesem Zusammenhang auch in Schlepp nehmen.

In einer weiteren Ausführungsform der Erfindung kann vor, während, nach oder in Unterbrechung des Schritts g) die Oberfläche des Eises beispielsweise mittels einer Bürste, einer Wasserstrahllanze oder der Abgabe von Dispersant gereinigt werden.

In einer weiteren Ausführungsform der Erfindung werden die Schritte d) bis g) für verschiedene in Schritt b) erfasste Positionen wiederholt.

Nachfolgend ist das erfindungsgemäße ferngesteuerte Unterwasserfahrzeug anhand von in den Zeichnungen dargestellten Ausführungsbeispielen näher erläutert.
- Fig. 1: Perspektivische Ansicht eines ferngesteuerten Unterwasserfahrzeugs
- Fig. 2: halbtransparente Ansicht eines ferngesteuerten Unterwasserfahrzeugs
- Fig. 3: Perspektivische Ansicht eines ferngesteuerten Unterwasserfahrzeugs mit Saugrohr
- Fig. 4: Perspektivische Ansicht eines ferngesteuerten Unterwasserfahrzeugs mit Wasserstrahllanze
- Fig. 5: halbtransparente Ansicht eines ferngesteuerten Unterwasserfahrzeugs mit Abscheider
- Fig. 6: Unterseeboot mit ferngesteuertem Unterwasserfahrzeug
- Fig. 7: Verfahren zur Absaugung von Öl von der Unterseite einer geschlossenen Eisdecke

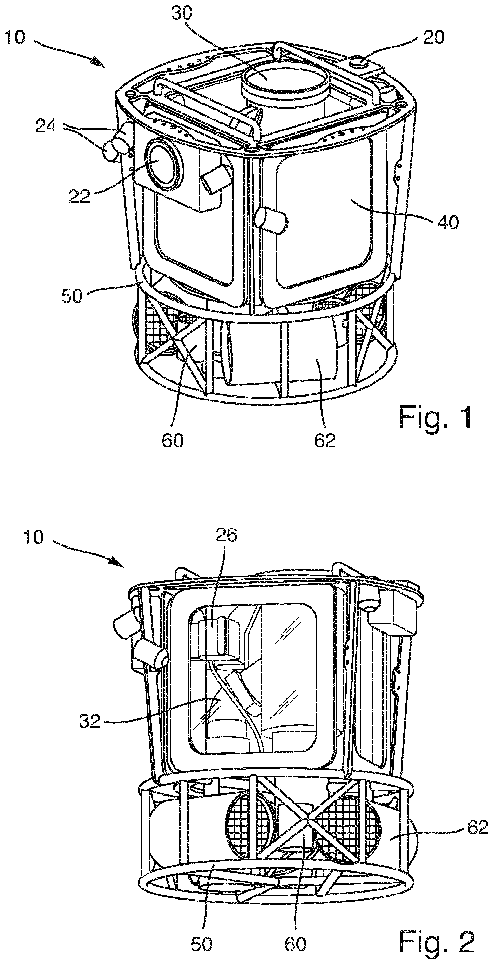

In Fig. 1 ist ein beispielhaftes ferngesteuertes Unterwasserfahrzeug 10 dargestellt. Dieses verfügt über erste Mittel zur Ortung von Öl 20, beispielsweise ein Fächerecholot, sowie über zweite Mittel zur Ortung von Öl 22, beispielsweise eine visuelle Kamera. Zur Ausleuchtung der Umgebung verfügt das ferngesteuerte Unterwasserfahrzeug 10 über Scheinwerfer 24. Um Öl aufzunehmen, weist das ferngesteuerte Unterwasserfahrzeug 10 eine Pumpe 30 auf. Auftriebskörper 40 erzeugen einen leichten Auftrieb für das ferngesteuerte Unterwasserfahrzeug 10, sodass dieses mit Hilfe der ersten Strahlruder 60 leicht in der Schwebe gehalten werden kann bzw. auf und ab bewegt werden kann. Zweite Strahlruder 62 dienen zur Bewegung in der horizontalen Ebene. Zur Stabilisierung und zum Schutz ist das ferngesteuerte Unterwasserfahrzeug 10 mit einem außen angeordneten Rahmengestell 50 versehen.

Fig. 2 zeigt zusätzlich eine Auswerteelektronik 26 für die Mittel zur Ortung von Öl sowie die dritte Verbindung zur Beförderung von abgesaugtem Fluid 32, über welche das mit der Pumpe 30 geförderte Öl zum Unterseeboot (nicht gezeigt) verbracht wird.

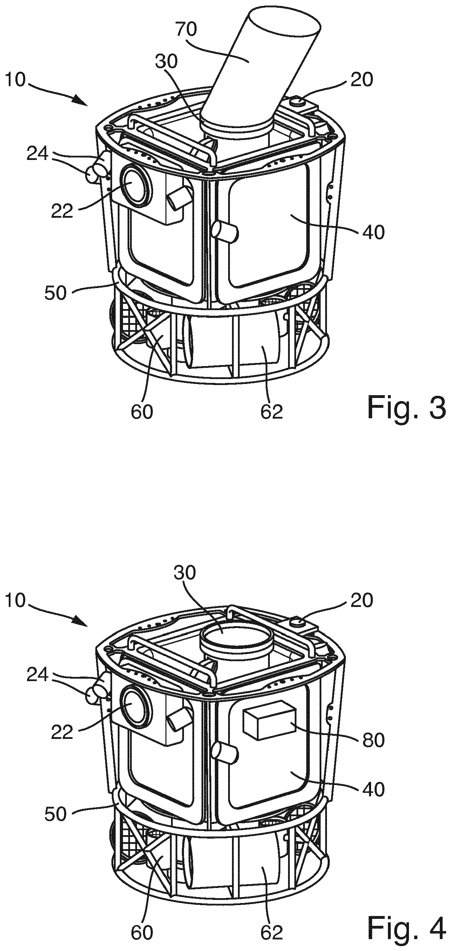

In Fig. 3 ist das in Fig. 1 gezeigte ferngesteuerte Unterwasserfahrzeug 10 mit einem zusätzlichen Saugrohr 70 gezeigt. Durch das Saugrohr 70 kann der Abstand zur Eisdecke als auch zum Öl vergrößert werden, wodurch die Wahrscheinlichkeit für sowohl eine Kollision mit dem Eis als auch eine Verunreinigung des ersten Strahlruders 60 als auch des zweiten Strahlruders 62 mit Öl verringert werden kann.

In Fig. 4 ist das in Fig. 1 gezeigte ferngesteuerte Unterwasserfahrzeug 10 mit einer zusätzlichen Vorrichtung zur Erzeugung eines Wasserstrahls 80 dargestellt. Mit Hilfe der Vorrichtung zur Erzeugung eines Wasserstrahls 80 wird ein Wasserstrahl (Wasserstrahllanze) erzeugt, mit welchem die Unterseite des Eises zusätzlich gereinigt werden kann.

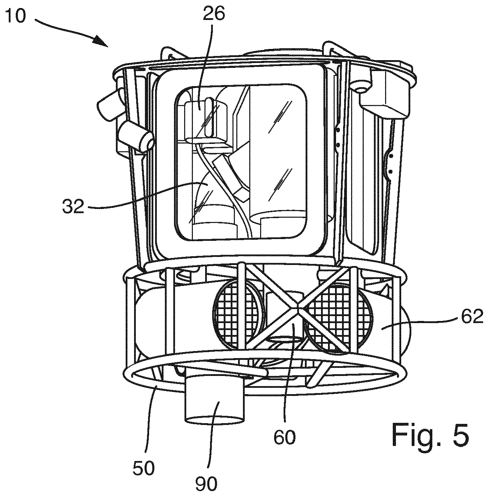

Fig. 5 zeigt das in Fig. 2 gezeigte ferngesteuerte Unterwasserfahrzeug 10 mit einem zusätzlichen Abscheider 90. Durch den Abscheider 90, welcher als Phasenabscheider ausgeführt ist.

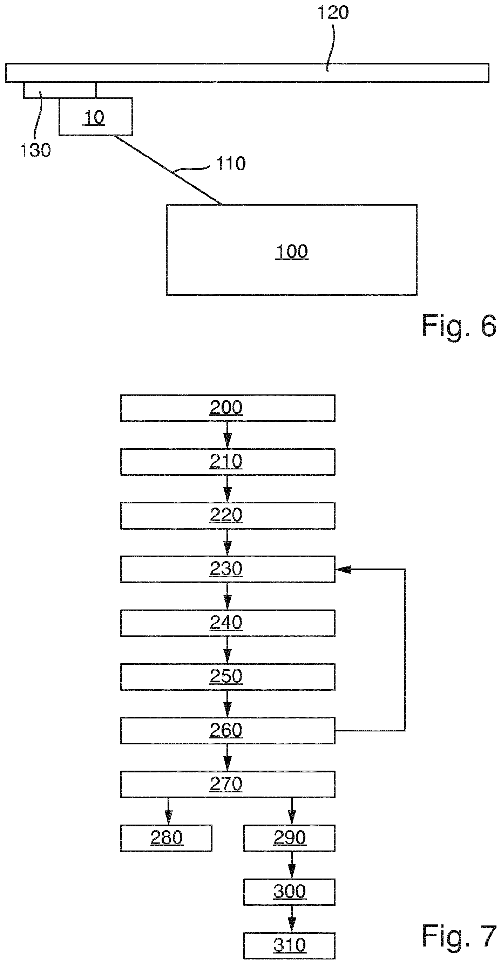

Fig. 6 zeigt ein Unterseeboot 100, welches über ein Verbindungsmittel 110 mit dem ferngesteuerten Unterwasserfahrzeug 10 verbunden ist. Das ferngesteuerte Unterwasserfahrzeug 10 entfernt Öl 130, welches sich unter Eis 120 gesammelt hat.

In Fig. 7 ist ein Verfahren zur Absaugung von Öl von der Unterseite einer geschlossenen Eisdecke dargestellt.

In Schritt 200 steuert das Unterseeboot die unter der geschlossenen Eisdecke liegenden Havariestelle an.

In Schritt 210 wird die ungefähren Position von Öl an der Havariestelle durch das Unterseeboot bestimmt.

In Schritt 220 wird das ferngesteuerte Unterwasserfahrzeugs aus dem Unterseeboot ausgesetzt.

In Schritt 230 wird die ungefähre Position von Öl durch das ferngesteuerte Unterwasserfahrzeug angefahren.

In Schritt 240 wird die genaue Position von Öl durch das ferngesteuerte Unterwasserfahrzeug bestimmt.

In Schritt 250 wird die genaue Position von Öl durch das ferngesteuerte Unterwasserfahrzeug angefahren.

In Schritt 260 wird Öl durch das ferngesteuerte Unterwasserfahrzeug abgesaugt und zum Unterseeboot durch die dritte Verbindung zur Beförderung von abgesaugtem Fluid sowie Lagerung des Öls transferiert.

Die Schritte 230 bis 260 können wiederholt werden.

In Schritt 270 wird das ferngesteuerte Unterwasserfahrzeugs durch das Unterseeboot aufgenommen.

In einer Ausführungsform des Verfahrens wird in Schritt 280 eines Ortes zur sicheren Entsorgung des aufgenommenen Öls angefahren.

In einer anderen alternativen Ausführungsform des Verfahrens wird in Schritt 290 das gesammelte Öls in wenigstens einem geeigneten Lagerbehälter am Grund deponiert, in Schritt 300 gewartet, bis das Eis abgeschmolzen ist, und in Schritt 310 der wenigstens eine Lagerbehälters durch ein Überwasserschiff aufgenommen.

### Bezugszeichen

- 10: ferngesteuertes Unterwasserfahrzeug
- 20: erstes Mittel zur Ortung von Öl
- 22: zweites Mittel zur Ortung von Öl
- 24: Scheinwerfer
- 26: Auswerteelektronik
- 30: Pumpe
- 32: dritte Verbindung zur Beförderung von abgesaugtem Fluid
- 40: Auftriebskörper
- 50: Rahmengestell
- 60: erstes Strahlruder
- 62: zweites Strahlruder
- 70: Saugrohr
- 80: Vorrichtung zur Erzeugung eines Wasserstrahls
- 90: Abscheider
- 100: Unterseeboot
- 110: Verbindungsmittel
- 120: Eis
- 130: Öl
- 200: Schritt a)
- 210: Schritt b)
- 220: Schritt c)
- 230: Schritt d)
- 240: Schritt e)
- 250: Schritt f)
- 260: Schritt g)
- 270: Schritt h)
- 280: Schritt i)
- 290: Schritt j)
- 300: Schritt k)
- 310: Schritt l)

## Patentansprüche

1. Ferngesteuertes Unterwasserfahrzeug (10) zur Absaugung von Öl von der Unterseite einer geschlossenen Eisdecke, wobei das ferngesteuerte Unterwasserfahrzeug (10) Antriebsmittel aufweist, wobei das ferngesteuerte Unterwasserfahrzeug (10) wenigstens eine Pumpe (30) aufweist, wobei die Pumpe (30) zur Absaugung von Fluid ausgebildet ist, wobei das ferngesteuerte Unterwasserfahrzeug (10) wenigstens ein Mittel zur Ortung von Öl (20, 22) aufweist, wobei das ferngesteuerte Unterwasserfahrzeug (10) ein Verbindungsmittel zu einem Mutterfahrzeug aufweist, wobei das Verbindungsmittel wenigstens eine erste Verbindung zur Kommunikation, eine zweite Verbindung zur Energieversorgung des ferngesteuerten Unterwasserfahrzeugs (10) und eine dritte Verbindung zur Beförderung von abgesaugtem Fluid (32) zum Mutterfahrzeug aufweist, wobei das ferngesteuerte Unterwasserfahrzeug (10) wenigstens einen ersten Auftriebskörper (40) aufweist, wobei das ferngesteuerte Unterwasserfahrzeug (10) unter Wasser einen Auftrieb aufweist.

2. Ferngesteuerte Unterwasserfahrzeug (10) nach Anspruch 1, **dadurch gekennzeichnet, dass** das Mittel zur Ortung von Öl (20, 22) ausgewählt ist aus der Gruppe umfassend Sonar, Fächerecholot, Ultraschall-Doppler-Profil-Strömungsmesser, Infrarotspektrometer, visuelle Kamera, Gaschromatograph, Massenspektrometer.

3. Ferngesteuerte Unterwasserfahrzeug (10) nach Anspruch 2, **dadurch gekennzeichnet, dass** das ferngesteuerte Unterwasserfahrzeug (10) wenigstens ein erstes Mittel zur Ortung von Öl (20) und wenigstens ein zweites Mittel zur Ortung von Öl (22) aufweist, wobei das erste Mittel zur Ortung von Öl (20) und das zweite Mittel zur Ortung von Öl (22) verschieden sind.

4. Ferngesteuerte Unterwasserfahrzeug (10) nach einem der vorstehenden Ansprüche, **dadurch gekennzeichnet, dass** das Antriebsmittel aus wenigstens einem ersten Strahlruder (60) besteht.

5. Ferngesteuerte Unterwasserfahrzeug (10) nach Anspruch 4, **dadurch gekennzeichnet, dass** das Antriebsmittel aus wenigstens einem ersten Strahlruder (60) besteht, wobei des wenigstens eine erste Strahlruder (60) vertikal zur Erzeugung von Auftrieb oder Abtrieb angeordnet ist.

6. Ferngesteuerte Unterwasserfahrzeug (10) nach einem der Ansprüche 4 oder 5, **dadurch gekennzeichnet, dass** das Antriebsmittel wenigstens zwei zweite Strahlruder (62) aufweist, wobei die wenigstens zwei zweiten Strahlruder (62) horizontal zur Erzeugung von Vortrieb angeordnet sind.

7. Ferngesteuerte Unterwasserfahrzeug (10) nach einem der vorstehenden Ansprüche, **dadurch gekennzeichnet, dass** die wenigstens eine Pumpe (30) zur Abtrennung von Öl und Wasser ausgebildet ist.

8. System zur Absaugung von Öl von der Unterseite einer geschlossenen Eisdecke bestehend aus einem ferngesteuerten Unterwasserfahrzeug (10) gemäß einem der vorstehenden Ansprüche und einem Unterseeboot, wobei das das ferngesteuerte Unterwasserfahrzeug (10) mit dem Verbindungsmittel mit dem Unterseeboot verbunden ist.

9. System nach Anspruch 8, **dadurch gekennzeichnet, dass** das Unterseeboot Mittel zur Energieerzeugung, Mittel zur Steuerung des ferngesteuerten Unterwasserfahrzeugs (10), Mittel zur Speicherung von Öl, Mittel zur Ortung von Öl sowie Mittel zur Aufnahme des ferngesteuerten Unterwasserfahrzeugs (10) aufweist.

10. Verfahren zur Absaugung von Öl von der Unterseite einer geschlossenen Eisdecke, wobei das Verfahren die folgenden Schritte umfasst:
a) Ansteuern der unter der geschlossenen Eisdecke liegenden Havariestelle mit einem Unterseeboot gemäß Anspruch 9,
b) Bestimmen der ungefähren Position von Öl an der Havariestelle durch das Unterseeboot,
c) Aussetzen eines ferngesteuerte Unterwasserfahrzeug (10) gemäß einem der Ansprüche 1 bis 7 aus dem Unterseeboot,
d) Anfahren der ungefähren Position von Öl durch das ferngesteuerte Unterwasserfahrzeug (10),
e) Bestimmen der genauen Position von Öl durch das ferngesteuerte Unterwasserfahrzeug (10),
f) Anfahren der genauen Position von Öl durch das ferngesteuerte Unterwasserfahrzeug (10),
g) Absaugen von Öl durch das ferngesteuerte Unterwasserfahrzeug (10), Transferieren des Öls zum Unterseeboot durch die dritte Verbindung zur Beförderung von abgesaugtem Fluid (32) sowie Lagerung des Öls,
h) Aufnehmen des ferngesteuerten Unterwasserfahrzeugs (10) durch das Unterseeboot.

11. Verfahren nach Anspruch 10, **dadurch gekennzeichnet, dass** das Verfahren zusätzlich den folgenden Verfahrensschritt umfasst:
i) Ansteuern eines Ortes zur sicheren Entsorgung des aufgenommenen Öls.

12. Verfahren nach einem der Ansprüche 10 oder 11, **dadurch gekennzeichnet, dass** die Schritte d) bis g) für verschiedene in Schritt b) erfasste Positionen wiederholt werden.

## Claims

1. Remote-controlled underwater vehicle (10) for extracting oil from the underside of a closed ice cover, wherein the remote-controlled underwater vehicle (10) has drive means, wherein the remote-controlled underwater vehicle (10) has at least one pump (30), wherein the pump (30) is designed for extracting fluid, wherein the remote-controlled underwater vehicle (10) has at least one means for localizing oil (20, 22), wherein the remote-controlled underwater vehicle (10) has a means for connection to a parent ship, wherein the connection means has at least one first connection for communication, a second connection for supplying power to the remote-controlled underwater vehicle (10), and a third connection for conveying extracted fluid (32) to the parent ship, wherein the remote-controlled underwater vehicle (10) has at least one first floatation panel (40), wherein the remote-controlled underwater vehicle (10) has underwater buoyancy.

2. Remote-controlled underwater vehicle (10) according to Claim 1, **characterized in that** the means for localizing oil (20, 22) is selected from the group consisting of sonar, multibeam sonar, acoustic Doppler current profiler, infrared spectrometer, visual camera, gas chromatograph and mass spectrometer.

3. Remote-controlled underwater vehicle (10) according to Claim 2, **characterized in that** the remote-controlled underwater vehicle (10) has at least one first means for localizing oil (20) and at least one second means for localizing oil (22), wherein the first means for localizing oil (20) and the second means for localizing oil (22) are different.

4. Remote-controlled underwater vehicle (10) according to one of the preceding claims, **characterized in that** the drive means consists of at least one first thruster (60).

5. Remote-controlled underwater vehicle (10) according to Claim 4, **characterized in that** the drive means consists of at least one first thruster (60), wherein the at least one first thruster (60) is vertically arranged to generate buoyancy or downward thrust.

6. Remote-controlled underwater vehicle (10) according to one of Claims 4 or 5, **characterized in that** the drive means has at least two second thrusters (62), wherein the at least two second thrusters (62) are arranged horizontally to generate propulsion.

7. Remote-controlled underwater vehicle (10) according to one of the preceding claims, **characterized in that** the at least one pump (30) is designed for separating oil and water.

8. System for extracting oil from the underside of a closed ice cover, consisting of a remote-controlled underwater vehicle (10) according to one of the preceding claims and a submarine, wherein the remote-controlled underwater vehicle (10) is connected with the submarine by the connection means.

9. System according to Claim 8, **characterized in that** the submarine has means for generating power, means for controlling the remote-controlled underwater vehicle (10), means for storing oil, means for localizing oil, along with means for accommodating the remote-controlled underwater vehicle (10).

10. Method for extracting oil from the underside of a closed ice cover, wherein the method consists of the following steps:
a) Heading for the accident site lying under the closed ice cover with a submarine according to Claim 9,
b) determining the rough position of the oil at the accident site with the submarine,
c) deploying a remote-controlled underwater vehicle (10) as claimed in one of claims 1 to 7 from the submarine,
d) approaching the rough position of the oil with the remote-controlled underwater vehicle (10),
e) determining the exact position of the oil with the remote-controlled underwater vehicle (10),
f) approaching the exact position of the oil with the remote-controlled underwater vehicle (10),
g) extracting the oil with the remote-controlled underwater vehicle (10), transferring the oil to the submarine via the third connection for conveying extracted fluid (32) as well as storing the oil,
h) retrieving the remote-controlled underwater vehicle (10) with the submarine.

11. The method according to Claim 10, **characterized in that** the method additionally consists of the following procedural step:
i) approaching a location for safely disposing of the collected oil.

12. Method according to one of Claims 10 or 11, **characterized in that** steps d) to g) are repeated for various positions detected in step b).

## Revendications

1. Véhicule sous-marin télécommandé (10) destiné à aspirer du pétrole présent sous la face inférieure d'une calotte de glace fermée, dans lequel le véhicule sous-marin télécommandé (10) présente des moyens de propulsion, dans lequel le véhicule sous-marin télécommandé (10) présente au moins une pompe (30), dans lequel la pompe (30) est configurée pour l'aspiration de fluide, dans lequel le véhicule sous-marin télécommandé (10) présente au moins un moyen de localisation de pétrole (20, 22), dans lequel le véhicule sous-marin télécommandé (10) présente un moyen de liaison avec un véhicule mère, dans lequel le moyen de liaison présente au moins une première liaison pour la communication, une deuxième liaison pour l'alimentation en énergie du véhicule sous-marin télécommandé (10) et une troisième liaison pour le transport de fluide aspiré (32) vers le véhicule mère, dans lequel le véhicule sous-marin télécommandé (10) présente au moins un premier corps de remontée (40), dans lequel le véhicule sous-marin télécommandé (10) présente sous l'eau une flottabilité.

2. Véhicule sous-marin télécommandé (10) selon la revendication 1, **caractérisé en ce que** le moyen de localisation de pétrole (20, 22) est sélectionné dans le groupe comprenant un sonar, un échosondeur en éventail, un débitmètre ultrasonore Doppler, un spectromètre infrarouge, une caméra visuelle, un chromatographe en phase gazeuse, un spectromètre de masse.

3. Véhicule sous-marin télécommandé (10) selon la revendication 2, **caractérisé en ce que** le véhicule sous-marin télécommandé (10) présente au moins un premier moyen de localisation de pétrole (20) et au moins un second moyen de localisation de pétrole (22), dans lequel le premier moyen de localisation de pétrole (20) et le second moyen de localisation de pétrole (22) sont différents.

4. Véhicule sous-marin télécommandé (10) selon l'une quelconque des revendications précédentes, **caractérisé en ce que** le moyen de propulsion se compose d'au moins un premier gouvernail à jet (60).

5. Véhicule sous-marin télécommandé (10) selon la revendication 4, **caractérisé en ce que** le moyen de propulsion se compose d'au moins un premier gouvernail à jet (60), dans lequel ledit premier gouvernail à jet (60) est disposé verticalement pour la production de la remontée ou de la descente.

6. Véhicule sous-marin télécommandé (10) selon une des revendications 4 ou 5, **caractérisé en ce que** le moyen de propulsion présente au moins deux second gouvernails à jet (62), dans lequel lesdits au moins deux seconds gouvernails à jet (62) sont disposé horizontalement pour la production de la propulsion.

7. Véhicule sous-marin télécommandé (10) selon l'une quelconque des revendications précédentes, **caractérisé en ce que** ladite au moins une pompe (30) est conçue pour la séparation du pétrole et de l'eau.

8. Système destiné à aspirer du pétrole présent sous la face inférieure d'une calotte de glace fermée, se composant d'un véhicule sous-marin télécommandé (10) selon l'une quelconque des revendications précédentes et d'un sous-marin, dans lequel le véhicule sous-marin télécommandé (10) est relié au sous-marin par le moyen de liaison.

9. Système selon la revendication 8, **caractérisé en ce que** le sous-marin présente des moyens pour la production d'énergie, des moyens pour la commande du véhicule sous-marin télécommandé (10), des moyens pour le stockage de pétrole, des moyens pour la localisation de pétrole ainsi que des moyens pour le logement du véhicule sous-marin télécommandé (10).

10. Procédé pour aspirer du pétrole présent sous la face inférieure d'une calotte de glace fermée, dans lequel le procédé comprend les étapes suivantes:
a) se rendre dans la zone d'avarie située sous la calotte de glace fermée avec un sous-marin selon la revendication 9,
b) déterminer la position approximative du pétrole dans la zone d'avarie au moyen du sous-marin,
c) faire sortir un véhicule sous-marin télécommandé (10) selon l'une quelconque des revendications 1 à 7 hors du sous-marin,
d) s'approcher de la position approximative du pétrole avec le véhicule sous-marin télécommandé (10),
e) déterminer la position exacte du pétrole au moyen du véhicule sous-marin télécommandé (10),
f) s'approcher de la position exacte du pétrole au moyen du véhicule sous-marin télécommandé (10),
g) aspirer le pétrole au moyen du véhicule sous-marin télécommandé (10), transférer le pétrole dans le sous-marin par la troisième liaison pour le transport du fluide aspiré (32) ainsi que stocker le pétrole,
h) reprendre le véhicule sous-marin télécommandé (10) dans le sous-marin.

11. Procédé selon la revendication 10, **caractérisé en ce que** le procédé comprend en outre l'opération suivante:
i) se rendre à un endroit permettant le déversement sûr du pétrole stocké.

12. Procédé selon une des revendications 10 ou 11, **caractérisé en ce que** l'on répète les étapes d) à g) pour différentes positions détectées à l'étape b).
